# EUROPÄISCHE PATENTSCHRIFT

(11) **EP 2 015 891 B1**
(45) Veröffentlichungstag und Bekanntmachung des Hinweises auf die Patenterteilung: **11.11.2009**
(21) Anmeldenummer: 07728660.7
(22) Anmeldetag: 30.04.2007
(51) Int. Cl.: B23K 37/047, B23P 21/00, B25J 9/00, B62D 65/00

(54) **VORRICHTUNG ZUM BEARBEITEN VON BAUTEILEN, INSBESONDERE EINER KRAFTFAHRZEUGKAROSSERIE**
DEVICE FOR MACHINING COMPONENTS, IN PARTICULAR OF A VEHICLE BODY
DISPOSITIF CONÇU POUR USINER DES COMPOSANTS, EN PARTICULIER DES COMPOSANTS D'UNE CARROSSERIE D'AUTOMOBILE

(30) Priorität: 05.05.2006 DE 102006020924
(43) Veröffentlichungstag der Anmeldung: 21.01.2009
(73) Patentinhaber: ThyssenKrupp Drauz Nothelfer GmbH, 74076 Heilbronn (DE)
(72) Erfinder: KIPPING, Josef, 66839 Schmelz (DE); KLEMM, Thomas, 55779 Heimbach (DE)
(74) Vertreter: Cohausz & Florack
(86) Internationale Anmeldenummer: PCT/EP2007/054206
(87) Internationale Veröffentlichungsnummer: WO 2007/128726

(56) Entgegenhaltungen:
- WO-A-89/10240
- DE-U1- 20 211 755
- DE-U1- 29 817 895
- JP-A- 62 222 906
- US-B2- 6 366 830

## Beschreibung

Die Erfindung betrifft eine Vorrichtung zum Bearbeiten von Bauteilen, insbesondere einer Kraftfahrzeugkarosserie, mit einem Transport- und Positioniergerät für ein Bauteil und mehreren um dieses Transport- und Positioniergerät herum angeordneten Bearbeitungsstationen, denen das von einem Halter des Transport- und Positioniergerätes gehaltene Bauteil in bearbeitungsgerechter Lage zuführbar ist.

Die Bearbeitung von komplexen Bauteilen, insbesondere Bauteilen einer Kraftfahrzeugkarosserie oder sogar ganzen Kraftfahrzeugkarosserien, erfolgt in einer bekannten Fertigungsanlage (DE 197 13 860 A1) in der Weise, dass die zu bearbeitenden Bauteile mittels geeigneter Transportmittel durch mehrere Bearbeitungsstationen einer Transferlinie transportiert werden, wo die Bearbeitung durch seitlich stationär angeordnete Bearbeitungsroboter erfolgt. In den Bearbeitungsstationen werden die Bauteile auf einem stationären Bauteilhalter in bearbeitungsgerechter Lage gehalten. Solche Fertigungsanlagen haben einen hohen Platzbedarf.

Bei einer anderen bekannten Vorrichtung zum Bearbeiten von Bauteilen (DE 101 53 807 A1) ist auf einem rotierenden Träger mindestens ein Bauteilhalter radial verschieblich angeordnet. Um die Drehachse des Trägers herum und unterhalb des Trägers sind verschiedene Bearbeitungsstationen, wie Schleif-, Bohr-, Fräs- und Drehwerkzeuge angeordnet. Mit dem drehbar angetriebenen Träger und dem auf dem Träger radial verschiebbar gelagerten Bauteilhalter lässt sich das von ihm gehaltene Bauteil zu den einzelnen Bearbeitungsstationen bringen. Um es an den Bearbeitungsstationen bearbeiten zu können, muss es dann noch mittels des Bauteilhalters auf die unterhalb des Trägers angeordneten einzelnen Werkzeuge abgesenkt werden. Eine solche Vorrichtung ist wegen des rotierend angetriebenen Trägers für den Bauteilträger und der darunter angeordneten Werkzeuge nur für die Bearbeitung vergleichsweise kleiner Bauteile ausgelegt. Für größere Bauteile, wie solche von Kraftfahrzeugkarosserien, ist die Vorrichtung wegen des übereinander angeordneten Aufbaus von Werkzeugen und Trägern nicht geeignet.

Um Bauteile, insbesondere Wafer, von einem Lagerort zu einer Bearbeitungsstation und zurück zum Lagerort oder einem anderen Lagerort zu transportieren, ist ein Transportgerät bekannt,(US 6 366 830 B2), das aus einem zweiarmigen Rotor und einem auf jedem Rotorarm exzentrisch gelagerten und um eine zur Rotorachse parallele Achse drehbar gelagerten Schwenkarm sowie aus an den freien Enden der Schwenkarme um eine zur Rotorachse parallele Achse verschwenkbaren weiteren Greiferarmen besteht. An diesen Greiferarmen sind verschwenkbar gelagerte, angetriebene Greifer angeordnet. Die Dreh-/Schwenkantriebe von Rotor, Schwenkarmen und Greifer werden durch eine Steuereinheit derart koordiniert, dass die Greifer verschiedene Orte, insbesondere die Lagerorte und die Bearbeitungsstation des Wafers erreichen können. Ob die dabei mit dem Wafer beschriebene Bahn unter platzsparendem Aspekt gestaltet ist, wird im Stand der Technik nicht behandelt.

Bei einer aus der Praxis wohlbekannten Vorrichtung der eingangs genannten Art ist das Transport- und Positioniergerät als Drehtisch mit mindestens einem darauf an seinem Umfang stationär angeordneten Bauteilträger ausgebildet. Bei Drehung des Drehtisches wird der Bauteilhalter auf einem Kreis zu den außerhalb dieses Kreises angeordneten Bearbeitungsstationen bewegt. Eine solche Vorrichtung erfordert viel Platz und ist an vorgegebene Räumlichkeiten kaum anpassbar.

Der Erfindung liegt die Aufgabe zugrunde, eine Vorrichtung zum Bearbeiten von Bauteilen, insbesondere von Kraftfahrzeugkarosserien, der eingangs genannten Art zu schaffen, deren Transport- und Positioniergerät für den Transport der Bauteile von einer Bearbeitungsstation zur nächsten Bearbeitungsstation möglichst wenig Platz benötigt.

Diese Aufgabe wird bei der Vorrichtung der eingangs genannten Art dadurch gelöst, dass das Transport- und Positioniergerät aus einem Rotor und einem darauf exzentrisch gelagerten und entgegengesetzt zum Rotor um eine zur Rotorachse parallele Achse angetriebenen, den Bauteilhalter tragenden Schwenkarm besteht, wobei die Drehbewegungen von Rotor und Schwenkarm derart aufeinander abgestimmt sind, dass der Bauteilhalter eine geschlossene Kurvenbahn mit Scheitelpunkten beschreibt, bei der zwischen ihren jeweils benachbarten Scheitelpunkten von dem Bauteilhalter nicht überstrichene Freiräume verbleiben.

Bei der Erfindung ist der Flächenbedarf auf ein Minimum beschränkt, weil der Bauteilhalter mit dem Bauteil nicht auf einem Kreis, sondern auf einer speziellen Kurvenbahn mit Scheitelpunkten umläuft. Die maximale radiale Position erreicht er in den an den Scheitelpunkten liegenden Bearbeitungsstationen, während er in den dazwischen liegenden Bereichen radial nach innen verlagert wird, so dass Freiräume entstehen, die für die Platzierung von Bearbeitungsrobotern, Werkzeugablagen und anderen Vorrichtungen dienen können. Die mögliche optimale Platzierung der Transport- und Positioniergeräte schafft auch genügend Frei- und Fahrfläche für fahrbare Transportgeräte, wie Gabelstapler, mit denen zwischen den Transport- und Positioniergeräten aufgestellte Bearbeitungsroboter oder andere Vorrichtungen erreicht und abtransportiert werden können. Wegen der verbleibenden Freiräume lässt sich eine erfindungsgemäße Transport- und Positioniergeräte umfassende Fertigungsanlage auch optimal den örtlichen Verhältnissen am Aufstellungsort anpassen. So kann das Transport- und Positioniergerät zwischen Säulen eines Gebäudes, z.B. einer Fertigungshalle, platziert werden, wobei die Säulen dann in den Freiräumen liegen. Die besonderen Kurvenbahnen mit Scheitelpunkten, z.B. Zykloiden und Ellipsen, haben den Vorteil, dass der Bauteilhalter auf den Bahnabschnitten zwischen den Scheitelpunkten mit vergleichsweise schneller Bahngeschwindigkeit bewegt wird, während er im Bereich der Scheitelpunkte mit der kleinsten Bahngeschwindigkeit bewegt wird, so dass er hier leicht in den für die Bearbeitung notwendigen Stillstand gebracht und nach der Bearbeitung wieder in Bewegung gesetzt werden kann.

Der Schwenkarm kann doppelarmig ausgebildet sein, um an seinem gegenüber dem Arm mit dem Bauteilhalter tragenden anderen Arm ein Werkzeug, z.B. einen Kappenfräser zu tragen, mit dem die Elektroden eines Schweißwerkzeuges eines Bearbeitungsroboters für das zu schweißende Bauteil bearbeitet werden können.

Für die Bearbeitung des Bauteils in den Bearbeitungsstationen ist es wichtig, dass der Bauteilhalter das Bauteil möglichst präzise in bearbeitungsgerechter Lage hält, weil anderenfalls ein Werkzeug eines Bearbeitungsroboters die zu bearbeitenden Stellen nicht exakt erreichen kann. Diese Forderung lässt sich nach einer Ausgestaltung der Erfindung mit relativ einfachen Mitteln dadurch erreichen, dass in den Bearbeitungsstationen Zentriereinheiten für den Bauteilhalter vorgesehen sind. Diese Zentriereinheiten sind so ausgebildet, dass sie den Bauteilhalter durch seine vertikale und seitliche Abstützung lagegerecht positionieren.

Um mit der erfindungsgemäßen Vorrichtung verschiedene Bauteile bearbeiten zu können, ist der Bauteilhalter auswechselbar. Für einen solchen Wechsel eines Bauteilhalters weist die Vorrichtung oberhalb des Transport- und Positioniergerätes einen Speicher auf, der verschiedenartige Bauteilhalter an ausgezeichneten Positionen der Umlaufbahn des Bauteilhalters, insbesondere an deren Scheitelpunkten, bereithält, wo mit wenigstens einer Wechselvorrichtung ein vom Schwenkarm getragener Bauteilhalter durch einen vom Speicher getragenen Bauteilhalter austauschbar ist. Die Wechselvorrichtung kann ein Bearbeitungsroboter mit geeignetem Greifer sein oder eine spezielle Hubeinheit des Speichers. In jedem Fall können mit dieser Platz sparenden Ausgestaltung der Erfindung die Bauteilhalter schnell gewechselt werden.

Die aufeinander abgestimmten Drehbewegungen von Rotor und Schwenkarm können mit verschiedenen Mitteln erzeugt werden. So können Rotor und Schwenkarm jeweils über eigene Drehantriebe verfügen. Vorzugsweise ist jedoch ein gemeinsamer Antrieb vorgesehen. Besonders vorteilhaft ist es, wenn der Rotor und der Schwenkarm getriebetechnisch über ein Rädergetriebe miteinander gekuppelt sind. Dabei können die Räder durch Verzahnung, Reibung oder Riemen miteinander gekuppelt sein. So kann ein Rädergetriebe aus einem drehfest auf einem stationären Sockel des Rotors gehaltenen Zahnkranz, einem damit kämmenden und auf dem Rotor drehbar gelagerten Zwischenrad und einem mit dem Zwischenrad kämmenden Abtriebsrad des Schwenkarms bestehen. Über das Übersetzungsverhältnis (Zähnezahl) dieser Zahnräder sowie den Achsabstand der Drehachsen von Rotor und Schwenkarm und die Länge des Hebelarms des Schwenkarms lassen sich die gewünschten Kurvenbahnen bestimmen.

Die Zufuhr von Energie und Steuerbefehlen zu dem Transport- und Positioniergerät erfolgt vorzugsweise von oberhalb des Transport- und Positioniergerätes über einen auf dem Schwenkarm in dessen Drehachse angeordneten Drehverteiler. Für die Zufuhrleitungen von Energie und Steuerbefehlen kann über dem Drehverteiler nach Art einer Pleuelstange ein Leitungsbaum mit einer zentral in der Achse des Rotors angeordneten Quelle verbunden sein.

Sofern auch Bearbeitungen mittels Laser durchgeführt werden sollen, sollte die Vorrichtung mit einem Strahlenschutz ausgerüstet sein. Dieser Strahlenschutz lässt sich nach einer weiteren Ausgestaltung der Erfindung dadurch realisieren, dass das Transport- und Positioniergerät in einer Kabine mit Schleusentoren an den Arbeitsstationen untergebracht ist. Eine solche Kabine nimmt wenig Platz in Anspruch, da der Bauteilträger nur für die Aufnahme und Bearbeitung des Bauteils radial weit zu den zum abgeschirmten Bearbeitungsroboter zu öffnenden Schleusentoren vorbewegt wird, während sein Transport zwischen den Schleusentoren auf den Platz sparenden Kurvenabschnitten zwischen den Scheitelpunkten erfolgt.

Die erfindungsgemäße Vorrichtung eignet sich vor allem für eine Kombination von mehreren, insbesondere gleichartigen Transport- und Positioniergeräten, wobei unter "gleichartig" nicht notwendigerweise identische Kurvenbahnen, sondern lediglich geschlossene Kurvenbahnen mit Scheitelpunkten verstanden werden. In diesem Sinne ist nach einer Ausgestaltung der Erfindung neben dem einen Transport- und Positioniergerät zumindest ein weiteres gleichartiges Transport- und Positioniergerät aufgestellt, mit dem zumindest dem Nahbereich einer Bearbeitungsstation des einen Transport- und Positioniergerätes ein vom Bauteilhalter des weiteren Transport- und Positioniergerätes gehaltenes Bauteil in bearbeitungsgerechter Lage zuführbar ist. Bei dieser Ausgestaltung kann bzw. können bei einem Geringstmaß an Platz an derselben Bearbeitungsstation bzw. in deren Nahbereich von einem Bearbeitungsroboter oder mehreren Bearbeitungsrobotern verschiedene Bearbeitungen nacheinander oder gleichzeitig durchgeführt werden. Während ein Bauteil von dem einen Transport- und Positioniergerät in bearbeitungsgerechter Lage an einer ersten Bearbeitungsstation gehalten wird, hält das andere Transport- und Positioniergerät ein anderes Bauteil an einer anderen Bearbeitungsstation in bearbeitungsgerechter Lage, so dass es nicht zu Kollisionen kommt. Wird die erste Bearbeitungsstation dann vom ersten Bauteil freigegeben, kann das andere Bauteil aus der anderen Bearbeitungsstation in die erste Bearbeitungsstation bewegt werden. Die erste Bearbeitungsstation kann auch von zwei Bearbeitungsrobotern erreichbar sein, die nacheinander oder gleichzeitig an dem zugeführten Bauteil ihre Bearbeitungen durchführen. So wird erreicht, dass bei geringem Platzbedarf in kurzer Bearbeitungszeit an verschiedenen Bearbeitungsstationen gleichzeitig und an derselben Bearbeitungsstation nacheinander, aber auch gleichzeitig, Bearbeitungen durchgeführt werden können.

Da das erfindungsgemäße Transport- und Positioniergerät für verschiedene Kurvenbahnen ausgelegt sein kann, lassen sich Positioniergeräte mit unterschiedlichen Kurvenbahnen und dazwischen angeordneten Bearbeitungs- und/oder Transportrobotern zu einer Platz sparenden Fertigungsanlage kombinieren. In manchen Fällen kann es sinnvoll sein, eine solche Fertigungsanlage auch mit herkömmlichen, Bauteilhalter tragenden Drehtischen zu ergänzen bzw. zu kombinieren.

Im Folgenden wird die Erfindung anhand einer ein Ausführungsbeispiel schematisch darstellenden Zeichnung näher erläutert. Im Einzelnen zeigen:
- Fig. 1: eine Vorrichtung zum Bearbeiten von Bauteilen mit einem Transport- und Positioniergerät und mehreren Bearbeitungsstationen sowie mehreren Freiräumen für Bearbeitungsroboter in Draufsicht,
- Fig. 2: ein Transport- und Positioniergerät der Vorrichtung gemäß Fig. 1 in Seitenansicht,
- Fig. 3a-c: das Transport- und Positioniergerät gemäß Fig. 1 in verschiedenen Phasen der Umpositionierung von einer ersten Bearbeitungsstation in eine dazu um 90° versetzte zweite Bearbeitungsstation bei einer zykloiden Kurvenbahn mit vier Scheitelpunkten,
- Fig. 4a-c: das Transport- und Positioniergerät gemäß Fig. 1 in verschiedenen Phasen der Umpositionierung von einer ersten Bearbeitungsstation in eine dazu um 120° versetzte zweite Bearbeitungsstation bei einer zykloiden Kurvenbahn mit drei Scheitelpunkten,
- Fig. 5a-c: das Transport- und Positioniergerät gemäß Fig. 1 in verschiedenen Phasen der Umpositionierung von einer ersten Bearbeitungsstation in eine dazu um 180° versetzte zweite Bearbeitungsstation bei einer elliptischen Kurvenbahn mit zwei Scheitelpunkten,
- Fig. 6: eine Fertigungsanlage mit mehreren Transport- und Positioniergeräten gemäß Fig. 1 und dazwischen angeordneten Bearbeitungs- und/oder Transportrobotern in Draufsicht und
- Fig. 7: die Bearbeitung und den Transport von einem Bauteil in benachbarten Bearbeitungsstationen.

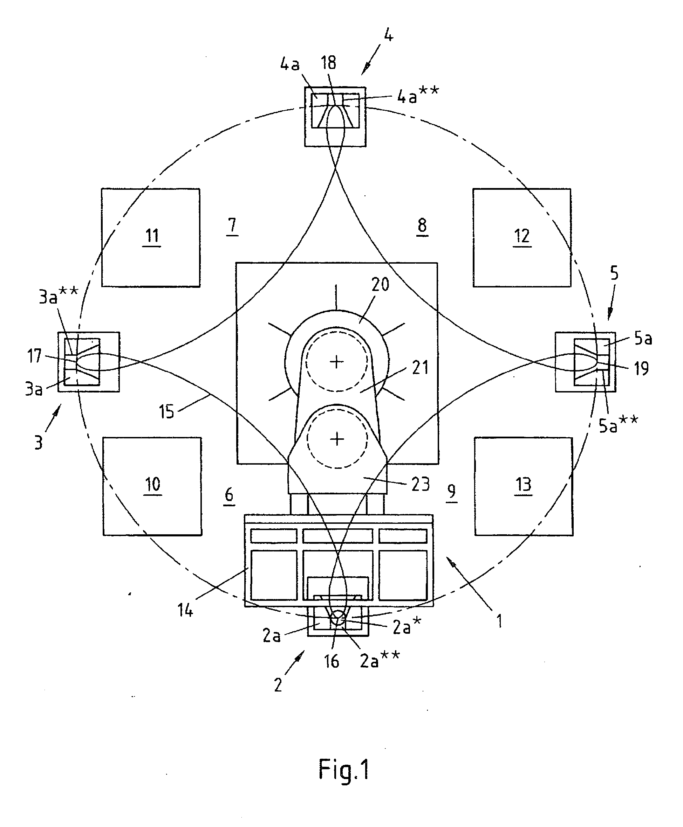

Die Vorrichtung zum Bearbeiten von Bauteilen insbesondere einer Kraftfahrzeugkarosserie weist entsprechend Fig. 1 ein Transport- und Positioniergerät 1 mit mehreren um dieses Transport- und Positioniergerät 1 herum angeordneten Bearbeitungsstationen 2, 3, 4, 5 auf. Zwischen den Bearbeitungsstationen 2, 3, 4, 5 gibt es Freiräume 6, 7, 8, 9, die für verschiedene Zwecke benutzt werden können, insbesondere für die Platzierung von Bearbeitungsrobotern, Werkzeugablagen usw. Die Vorrichtung kann auch so platziert werden, dass in den Freiräumen 6, 7, 8, 9 die tragenden Säulen einer Fertigungshalle stehen. So kann man eine optimale Anpassung an die örtlichen Verhältnisse erreichen. Im Ausführungsbeispiel der Fig. 1 sind die Freiräume 6, 7 für die Platzierung von nur schematisch als Kästen dargestellten Bearbeitungsrobotern 10, 11, 12, 13 genutzt.

Das Transport- und Positioniergerät 1 weist einen auswechselbaren Bauteilhalter 14, z.B. einen bekannten Spannrahmen für das nicht dargestellte, zu bearbeitende Bauteil auf. Dieser Bauteilhalter 14 wird durch das Transport- und Positioniergerät 1 auf einer zykloiden Kurvenbahn 15 mit Scheitelpunkten 16, 17, 18, 19 zu den Bearbeitungsstationen 2, 3, 4, 5 bewegt. In den Scheitelpunkten 16, 17, 18, 19 wird der Bauteilhalter 14 und damit auch das gehaltene Bauteil in einer für die Bearbeitung durch mindestens einen der benachbarten Bearbeitungsroboter 10, 11, 12, 13 passenden Lage gehalten. In der in Fig. 1 dargestellten Lage des Bauteilhalters 14 kann sowohl der Bearbeitungsroboter 10 als auch der Bearbeitungsroboter 13 am Bauteil eine Bearbeitung durchführen. Die besondere Kurvenbahn 15 schafft die Voraussetzung dafür, dass die Vorrichtung mit dem Transport- und Positioniergerät 1 und den Bearbeitungsrobotern 10, 11, 12, 13 sehr kompakt baut, also einen möglichst geringen Flächenbedarf hat.

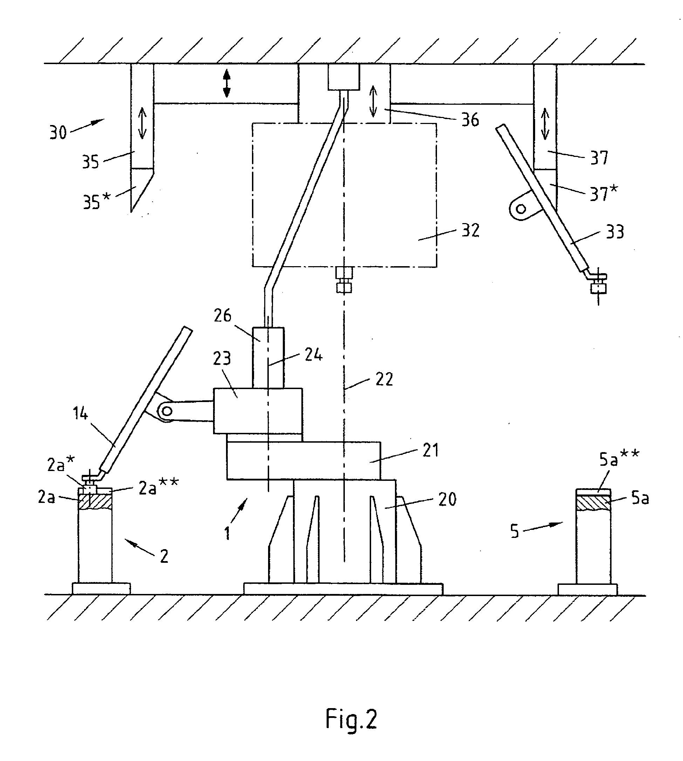

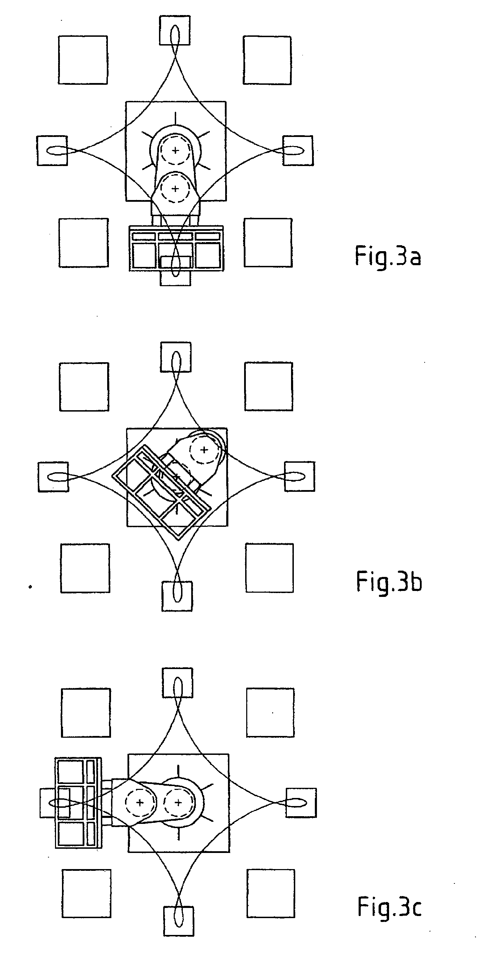

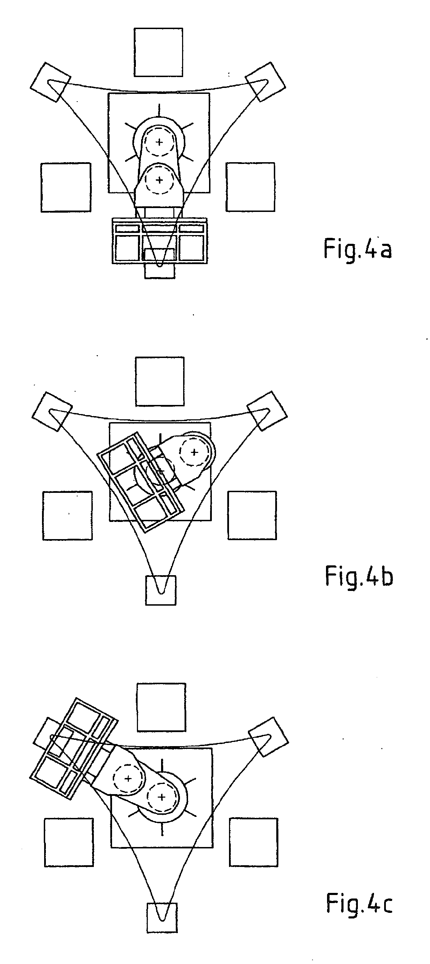

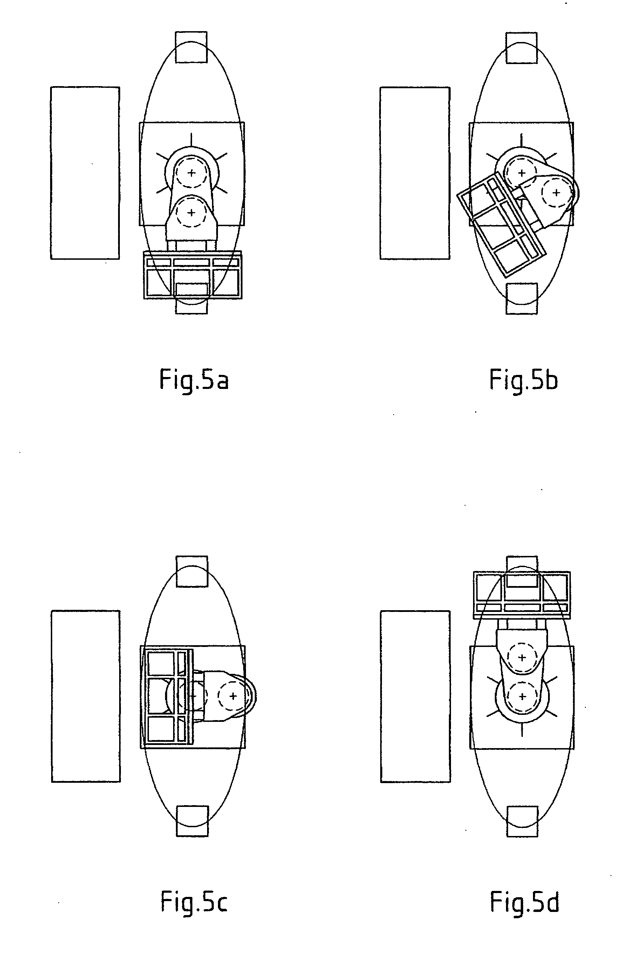

Die beschriebene zykloide Kurvenbahn 15 mit vier Scheitelpunkten 16, 17, 18, 19 gemäß Fig. 1 oder 3a-c, aber auch andere zykloide Kurvenbahnen mit einer anderen Anzahl von Scheitelpunkten gemäß Fig. 4a-c oder eine elliptische Kurvenbahn gemäß Fig. 5a-d werden beim Ausführungsbeispiel der Erfindung mit einem besonderen Aufbau und Getriebe des Transport- und Positioniergerätes erreicht. Wie Fig. 2 zeigt, weist das Transport- und Positioniergerät 1 auf einem stationären Sockel 20 einen Rotor 21 mit einem im Einzelnen nicht dargestellten Drehantrieb auf. Auf dem Rotor 21 ist exzentrisch zu dessen Rotorachse 22 ein Schwenkarm 23 um eine zur Rotorachse 22 parallele Achse 24 drehbar gelagert. Der Schwenkarm 23 ist antriebsmäßig mit dem Rotor 22 über ein Rädergetriebe in der Weise gekuppelt, dass die Drehrichtungen von Rotor 22 und Schwenkarm 23 entgegengesetzt sind. So ist z.B. auf dem Sockel 20 ein außen verzahnter Zahnkranz drehfest gehalten, der mit dem vom Rotor 22 getragenen Zwischenzahnrad im Eingriff steht. Das Zwischenzahnrad kämmt mit einem Abtriebszahnrad, das am freien Ende des Rotors 22 drehbar gelagert ist und mit einer Antriebswelle des Schwenkarms 23 drehfest verbunden ist. Über das Verhältnis der Zähnezahl der verschiedenen Zahnräder und die wirksamen Hebelarmlängen von Rotor 22 und Schwenkarm 23 lassen sich die gewünschten unterschiedlichen Bahnkurven erzeugen, von denen die Figuren 3a bis 5d drei charakteristische Beispiele zeigen.

Der Schwenkarm 23 trägt an seinem freien Ende auswechselbar einen Bauteilhalter 14, insbesondere einen Spannrahmen, mit dem das zu bearbeitende Bauteil in einer exakt vorgegebenen bearbeitungsgerechten Lage gehalten werden kann. Zur Unterstützung der Positionierung in dieser Lage kann in den Bearbeitungsstationen 2, 3, 4, 5 jeweils eine Zentriereinheit 2a, 3a, 4a, 5a vorgesehen sein, die aus einem vertikal gelagerten Stützrad 2a* am Schwenkarm 23 oder Bauteilhalter 14 und einer stationären Kulissenführung 2a**, 3a**, 4a**, 5a** besteht, in die das Stützrad 2a* bei der im Wesentlichen radialen Bewegung des Bauteilhalters 25 einläuft.

Auf dem Schwenkarm 23 ist in dessen Drehachse 24 ein Drehverteiler 26 für die Zufuhr von Energie und Steuerbefehlen angeordnet, der mit einem ortsfesten Anschlusspunkt z.B. an der Hallendecke verbunden ist.

An der Hallendecke ist ein sternförmiger, insbesondere kreuzförmiger Speicher 30 für mehrere verschiedenartige Bauteilhalter 31, 32, 33 mit Hubeinheiten 35, 36, 37 gehalten, derart, dass an den Bearbeitungsstationen 2, 3, 4, 5 der Bauteilhalter 14 mittels der zugehörigen Hubeinheit 35, 36, 37 in eine für den Austausch günstige Position gebracht werden kann. So erfolgt zunächst die Übergabe des nicht mehr benötigten Bauteilhalters an die leere Hubeinheit und dann nach Relativdrehung von Speicher 30 und Transport- und Positioniergerät die Übergabe des neuen Bauteilhalters vom Speicher an das Transport- und Positioniergerät. Der Austausch selbst erfolgt vom Transport- und Positioniergerät gegebenenfalls auch mit einem Bearbeitungsroboter.

In den Figuren 3a-c, 4a-c und 5a-d sind für getriebetechnisch unterschiedlich ausgelegte Transport- und Positioniergeräte verschiedene, charakteristische Kurvenbahnen beispielhaft dargestellt, auf denen der Bauteilhalter des Transport- und Positioniergerätes von einer Bearbeitungsstation zur nächsten bewegt wird. In allen Fällen gilt die Beziehung Winkelsumme - Taktwinkel = Eigendrehwinkel des Rotors, wobei die Winkelsumme = 360° beträgt, der Taktwinkel der Winkel zwischen den benachbarten Bearbeitungsstationen = Winkel der Eigenrotation des Bauteilhalters zwischen den benachbarten Bearbeitungsstationen ist und Eigendrehwinkel des Rotors der Winkel des Rotors zwischen den benachbarten Bearbeitungsstationen ist.

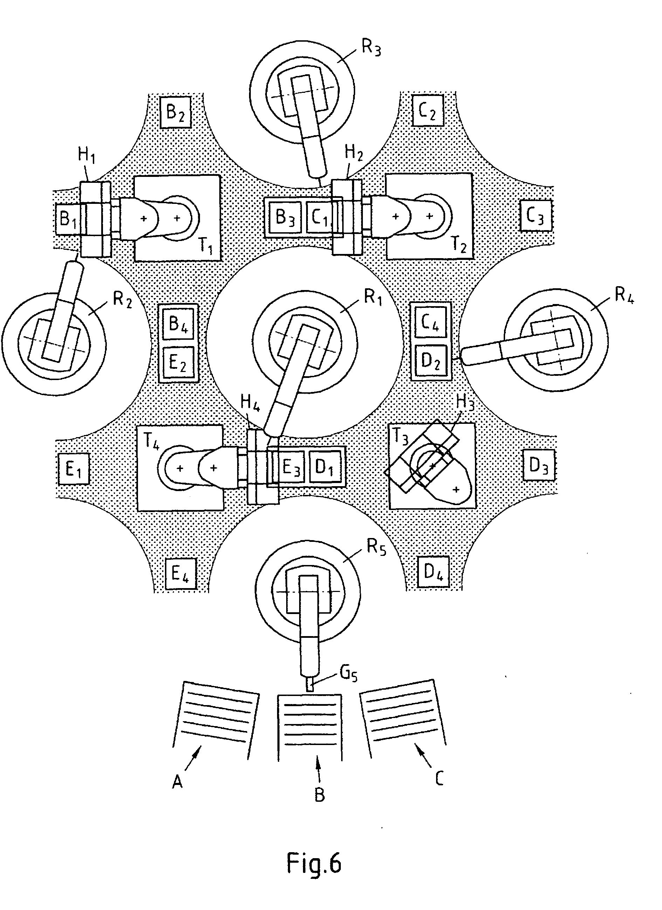

Vorrichtungen zum Bearbeiten von Bauteilen mit gleichen und/oder unterschiedlich ausgelegten Transport- und Positioniergeräten der erfindungsgemäßen Art können miteinander, aber auch mit solchen herkömmlicher Art, wie z.B. Drehtischen, und mit zwischen ihnen angeordneten Bearbeitungs- und/oder Transportrobotern zu einer Platz sparenden Fertigungsanlage zusammengestellt werden, wie sie in Fig. 6 dargestellt ist. Eine solche Fertigungsanlage kann mit gleichartigen oder anderen Fertigungsanlagen zu einer noch größeren Anlage kombiniert werden.

Bei der in Fig. 6 dargestellten Fertigungsanlage sind vier Transport- und Positioniergeräte T₁, T₂, T₃, T₄ im Raster angeordnet. Um das Transport- und Positioniergerät T₁ herum sind vier Bearbeitungsstationen B₁, B₂, B₃, B₄ angeordnet. In entsprechender Weise sind um das Transport- und Positioniergerät T₂ vier Bearbeitungsstationen C₁, C₂, C₃, C₄ angeordnet, wobei die Bearbeitungsstation B₃ des ersten Transport- und Positioniergerätes T₁ deckungsgleich mit oder im Nahbereich der Bearbeitungsstation C₁ des zweiten Transport- und Positioniergerätes T₂ angeordnet ist, was in der Zeichnung durch den gemeinsamen Rahmen schematisch dargestellt ist. In entsprechender Weise sind den weiteren Transport- und Positioniergeräten T₃, T₄ Bearbeitungsstationen D₁, D₂, D₃, D₄ bzw. E₁, E₂, E₃, E₄ zugeordnet, wobei die Bearbeitungsstationen C₄, D₂ einerseits und D₁, E₃ andererseits und B₄, E₂ weitererseits deckungsgleich oder nah nebeneinander angeordnet sind. Die Bauteilhalter H₁, H₂, H₃, H₄ der einzelnen Transport- und Positioniergeräte T₁, T₂, T₃, T₄ mit ihren Antrieben überstreichen den schraffierten Bereich. In nicht von den Bauteilhaltern H₁, H₂, H₃, H₄ überstrichenen Freiräumen sind Bearbeitungs- und/oder Transportroboter R₁, R₂, R₃, R₄, R₅ positioniert. Sofern ein Bearbeitungs- und/oder Transportroboter zentral zwischen Transport- und Positioniergeräten T₁, T₂, T₃, T₄ angeordnet ist, wie es im Ausführungsbeispiel für den Transport- und Bearbeitungsroboter R₁ der Fall ist, kann dieser Bearbeitungen an acht Bearbeitungsstationen B₃, C₁, C₄, D₂, D₁, E₃, E₂, B₄ vornehmen, die verschiedenen Transport- und Positioniergeräten T₁, T₂, T₃, T₄ zugeordnet sind, wobei die jeweils unmittelbar benachbarten Bearbeitungsstationen B₃, C₁ bzw. C₄, D₂ bzw. D₁, E₃ bzw. E₂, B₄ auch deckungsgleich sein können, aber von verschiedenen Transport- und Positioniergeräten T₁, T₂, T₃, T₄ bedient werden. Die äußeren Transport- und Bearbeitungsroboter R₂, R₃, R₄, R₅ können dagegen Bearbeitungen nur an den ihnen zugewandten vier Bearbeitungsstationen vornehmen, beispielsweise der Roboter R₃ nur an den Bearbeitungsstationen B₂, B₃, C₁, C₂, es sei denn, dass sich an die dargestellte Fertigungsanlage eine weitere gleichartige, in Fig. 6 aber nicht dargestellte Fertigungsanlage anschließt.

Während jedes Transport- und Positioniergerät nur dazu dient, das zu bearbeitende Werkstück aufzunehmen und in bearbeitungsgerechter Position für die Bearbeitung durch das Werkzeug des Transport- und/oder Bearbeitungsroboters zu halten, dient der Transport- und/oder Bearbeitungsroboter, wie schon die Bezeichnung aussagt, sowohl dazu, Bearbeitungen am Bauteil vorzunehmen und das Bauteil in der Fertigungsanlage zu transportieren, als auch nur zum Transport oder zur Bearbeitung. Jedes Transport- und Positioniergerät ist deshalb mit einem auf das zu bearbeitende Bauteil abgestimmten auswechselbaren Bauteilhalter bestückt, während der Bearbeitungs- und/oder Transportroboter mit Werkzeugen und/oder Haltern/Greifern für die Bauteile bestückt werden kann.

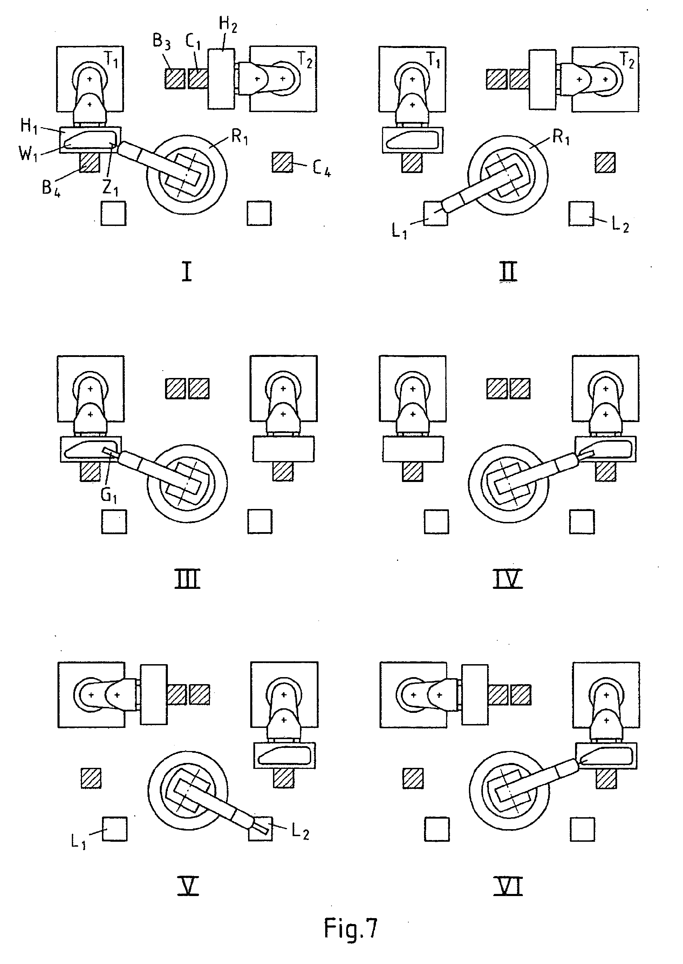

In Fig. 7 ist dargestellt, wie ein zu bearbeitendes Bauteil W₁ von dem Transport- und Positioniergerät T₁ zum nächsten Transport- und Positioniergerät T₂ transportiert wird und an den einzelnen Bearbeitungsstationen bearbeitet wird. In der Phase I wird das mittels des Halters H₁ des ersten Transport- und Positioniergerätes T₁ in bearbeitungsgerechter Lage an der ersten Bearbeitungsstation B₄ gehaltene Bauteil W₁ von dem mit einem Werkzeug Z₁ z.B. einer Schweißzange, bestückten Bearbeitungsroboter R₁ bearbeitet. Nach dieser Bearbeitung wird in der Phase II das Werkzeug Z₁ des Bearbeitungsroboters R₁ gewechselt. Das Werkzeug Z₁ wird am Lagerort L₁ abgelegt und gegen einen am Lagerort L₂ abgelegten Greifer G₁ ausgetauscht. In der Phase III übergibt der Bearbeitungsroboter R₁ das Bauteil W₁ an das zweite Transport- und Positioniergerät T₂. Dessen Bauteilhalter H₂ hält in der Phase IV das Werkstück W₁ an der weiteren Bearbeitungsstation C₄ in bearbeitungsgerechter Lage für die weitere Bearbeitung. In der Phase V erfolgt dann wieder ein Werkzeugwechsel, und zwar vom Greifer G₁ zum Werkzeug Z₁. In der Phase VI erfolgt dann mittels des Bearbeitungsroboters R₁ die weitere Bearbeitung, z.B. die Schweißung, am Bauteil W₁. Bei der beschriebenen Phasenfolge von Bearbeitungen und Transporten sind nur die Bearbeitungsstationen B₄, C₄ bedient worden. Es versteht sich, dass auch die zwischen den Transport- und Positioniergeräten T₁, T₂ nahe benachbart liegenden Bearbeitungsstationen B₃, C₁ von dem Bearbeitungs- und Transportroboter R1 hätten bedient werden können. Das bedeutet, dass jeder Bearbeitungs- und Transportroboter R₁ zwei Bearbeitungsstationen B₁, B₃ bzw. B₂, B₄ eines jeden in seinem Wirkungsbereich liegenden Transport- und Positioniergerätes T₁, T₂ bedienen kann, also bei mittiger Anordnung acht und bei Anordnung am Rande einer Anlage vier Bearbeitungsstationen.

Der Fluss der Bauteile durch die beschriebene Fertigungsanlage kann verschieden sein. Er hängt vom Bauteil und den Bearbeitungen ab. In Fig. 6 sind Speicher A, B, C mit verschiedenen Typen von Bauteilen dargestellt. In einem ersten Fall entnimmt der Bearbeitungs- und Transportroboter R₅ mit einem geeigneten Greifer G₅ ein Bauteil dem Speicher A und ein weiteres Bauteil dem Speicher B und übergibt sie an den Bauteilhalter H₄ des Transport- und Positioniergerätes T₄, der die Bauteile für die Bearbeitung festspannt und sie zu einer oder mehreren der zugeordneten Bearbeitungsstationen transportiert und hier in bearbeitungsgerechter Lage hält. Nach abgeschlossener Bearbeitung wird es von einem der Bearbeitungs- und Transportroboter R₁, R₂ an das nächste Transport- und Positioniergerät T₁ weitergereicht, wo es an den zugeordneten Bearbeitungsstationen weiter bearbeitet wird. Abschließend wird es von dem Bearbeitungs- und Transportroboter R₃ übernommen und aus der Fertigungsanlage heraus oder zu weiteren Transport- und Positioniergeräten gefördert.

Andere Kombinationen von Bauteilen können einen weiteren Weg durch die Fertigungsanlage nehmen, um andere oder mehr Bearbeitungen an den Bauteilen vornehmen zu können. So kann der Bearbeitungs- und Transportroboter R₅ mit einem geeigneten Greifer Bauteile den Speichern A, B, C zur Bearbeitung entnehmen. Das bzw. die Bauteile übergibt der Bearbeitungs- und Transportroboter R₅ zunächst an den Bauteilhalter H₄ des Transport- und Positioniergerätes T₄. Dann erfolgt die Übergabe des bzw. der Bauteile mit einem der Bearbeitungs- und Transportroboter R₁, R₅ an das Transport- und Positioniergerät T₃. Dann geht es weiter über das Transport- und Positioniergerät T₂ zum Transport- und Positioniergerät T₁, von wo es dann weiter wie bei den aus den Speichern A und B entnommenen Bauteilen geht. Mit ein und derselben Fertigungsanlage lassen sich so verschiedene Bearbeitungsprogramme fahren.

## Patentansprüche

1. Vorrichtung zum Bearbeiten von Bauteilen (W₁) mit einem Transport- und Positioniergerät (1, T₁, T₂, T₃, T₄) für ein Bauteil (W₁) und mehreren um dieses Transport- und Positioniergerät (1, T₁, T₂, T₃, T₄) herum angeordneten Bearbeitungsstationen (2, 3, 4, 5), denen das von einem Halter (14) des Transport- und Positioniergerätes (1) gehaltene Bauteil (W) in bearbeitungsgerechter Lage zuführbar ist, **dadurch gekennzeichnet, dass** das Transport- und Positioniergerät (1, T₁, T₂, T₃, T₄) aus einem Rotor (21) und einem darauf exzentrisch gelagerten, und entgegengesetzt zum Rotor (21) um eine zur Rotorachse (22) parallele Achse (24) angetriebenen, den Bauteilhalter (14) tragenden Schwenkarm (23) besteht, wobei die Drehbewegungen von Rotor (21) und Schwenkarm (23) derart aufeinander abgestimmt sind, dass der Bauteilhalter (14) eine geschlossene Kurvenbahn (15) mit Scheitelpunkten (16, 17, 18, 19) beschreibt, bei der zwischen ihren jeweils benachbarten Scheitelpunkten (16, 17, 18, 19) von dem Bauteilhalter (14) nicht überstrichene Freiräume (6, 7, 8, 9) verbleiben.

2. Vorrichtung nach Anspruch 1, **dadurch gekennzeichnet, dass** der Schwenkarm (23) doppelarmig ausgebildet ist.

3. Vorrichtung nach Anspruch 1 oder 2, **dadurch gekennzeichnet, dass** in den Bearbeitungsstationen (2, 3, 4, 5) Zentriereinheiten (2a*, 3a*, 4a*, 5a*) für den Bauteilhalter (14) vorgesehen sind.

4. Vorrichtung nach einem der Ansprüche 1 bis 3, **dadurch gekennzeichnet, dass** oberhalb des Transport- und Positioniergerätes (1) ein Speicher ist, der die verschiedenartigen Bauteilhalter an ausgezeichneten Positionen der Umlaufbahn bereithält, wo mit mindestens einer Wechselvorrichtung ein vom Schwenkarm getragener Bauteilhalter gegen einen vom Speicher getragenen andersartigen Bauteilhalter austauschbar ist.

5. Vorrichtung nach einem der Ansprüche 1 bis 4, **dadurch gekennzeichnet, dass** der Rotor (21) und der Schwenkarm (23) getriebetechnisch über ein Rädergetriebe miteinander gekuppelt sind.

6. Vorrichtung nach einem der Ansprüche 1 bis 5, **dadurch gekennzeichnet, dass** die Zufuhr von Energie und Steuerbefehlen zu dem Transport- und Positioniergerät (1) von oberhalb des Transport- und Positioniergerätes (1) über einen auf dem Schwenkarm (23) in dessen Drehachse (24) angeordneten Drehverteiler (26) erfolgt.

7. Vorrichtung nach einem der Ansprüche 1 bis 6, **dadurch gekennzeichnet, dass** das Transport- und Positioniergerät (1) in einer Strahlenschutzkabine mit Schleusentoren an den Bearbeitungsstationen (2, 3, 4, 5) untergebracht ist.

8. Vorrichtung nach einem der Ansprüche 1 bis 7, **dadurch gekennzeichnet, dass** neben dem Transport- und Positioniergerät (1, T₁) zumindest ein weiteres gleichartiges Transport- und Positioniergerät (T₂) aufgestellt ist, mit dem zumindest dem Nahbereich einer Bearbeitungsstation (B₃) des einen Transport- und Positioniergerätes (T₁) ein vom Bauteilhalter des weiteren Transport- und Positioniergerätes (T₂) gehaltenes Bauteil in bearbeitungsgerechter Lage zuführbar ist.

9. Vorrichtung nach Anspruch 8, **dadurch gekennzeichnet, dass** mehrere Transport- und Positioniergeräte (T₁, T₂, T₃, T₄) mit gleich und/oder unterschiedlich vielen Scheitelpunkten ihrer Kurvenbahnen und dazwischen angeordnete Bearbeitungs- und/oder Transportroboter (R₁, R₂, R₃, R₄, R₅) eine Fertigungsanlage bilden.

10. Vorrichtung nach einem der Ansprüche 1 bis 8, **dadurch gekennzeichnet, dass** die geschlossene Kurvenbahn des Bauteilhalters eine Ellipse ist.

11. Vorrichtung nach einem der Ansprüche 1 bis 9, **dadurch gekennzeichnet, dass** die geschlossene Kurvenbahn eine Hypozykloide mit drei Scheitelpunkten ist.

12. Vorrichtung nach einem der Ansprüche 1 bis 9, **dadurch gekennzeichnet, dass** die geschlossene Kurvenbahn eine Astroide mit vier Scheitelpunkten ist.

## Claims

1. A device for machining components (W₁) comprising a transport and positioning unit (1, T₁, T₂, T₃, T₄) for a component (W₁) and a plurality of machining stations (2, 3, 4, 5) arranged around said transport and positioning unit (1, T₁, T₂, T₃, T₄), to which the component (W) held by a holder (14) of the transport and positioning unit (1) may be fed in a position ready for machining, **characterised in that** the transport and positioning unit (1, T₁, T₂, T₃, T₄) consists of a rotor (21) and a pivoting arm (23) supporting the component holder (14) mounted eccentrically thereon and driven in opposition to the rotor (21) about an axis (24) parallel to the rotor axis (22) the rotational movements of the rotor (21) and the pivoting arm (23) being synchronised such that the component holder (14) describes a closed curved path (15) comprising apexes (16, 17, 18, 19), in which free spaces (6, 7, 8, 9) remain between the respective adjacent apexes (16, 17, 18, 19) thereof, which are not passed over by the component holder (14).

2. The device according to Claim 1, **characterised in that** the pivoting arm (23) is configured as a double-armed device.

3. The device according to Claim 1 or 2, **characterised in that** centring units (2a*, 3a*, 4a*, 5a*) for the component holders (14) are provided in the machining stations (2, 3, 4, 5).

4. The device according to one of Claims 1 to 3, **characterised in that** above the transport and positioning unit (1) is a store which holds in readiness the different types of component holder at specific positions on the circulating path, where by means of at least one changing device a component holder supported by the pivoting arm may be exchanged for a different type of component holder carried by the store.

5. The device according to one of Claims 1 to 4, **characterised in that** the rotor (21) and the pivoting arm (23) are coupled to one another in terms of transmission technology by means of a wheel gear.

6. The device according to one of Claims 1 to 5, **characterised in that** power and control commands are supplied to the transport and positioning unit (1) from above the transport and positioning unit (1) via a rotary distributor (26) arranged on the pivoting arm (23) in the rotational axis (24) thereof.

7. The device according to one of Claims 1 to 6, **characterised in that** the transport and positioning unit (1) is housed in a radiation protection cabinet with lock gates at the machining stations (2, 3, 4, 5).

8. The device according to one of Claims 1 to 7, **characterised in that** in addition to the transport and positioning unit (1, T₁) at least one further similar transport and positioning unit (T₂) is deployed, by means of which a component held by the component holder of the further transport and positioning unit (T₂) is able to be supplied in the position ready for machining at least to the proximity of a machining station (B₃) of the one transport and positioning unit (T₁).

9. The device according to Claim 8, **characterised in that** a plurality of transport and positioning units (T₁, T₂, T₃, T₄) with the same and/or different numbers of apexes on their curved paths and machining and/or transport robots (R₁, R₂, R₃, R₄, R₅) arranged therebetween form a manufacturing plant.

10. The device according to one of Claims 1 to 8, **characterised in that** the closed curved path of the component holder is an ellipse.

11. The device according to one of Claims 1 to 9, **characterised in that** the closed curved path is a hypocycloid with three apexes.

12. The device according to one of Claims 1 to 9, **characterised in that** the closed curved path is an astroid with four apexes.

## Revendications

1. Dispositif pour l'usinage de composants (W1), avec un appareil de transport et de positionnement (1, T₁, T₂, T₃, T₄) pour un composants (W₁), et plusieurs postes d'usinage (2, 3, 4, 5) disposés autour de cet appareil de transport et de positionnement (1, T₁, T₂, T₃, T₄), auxquels le composant (W), maintenu par un porte-pièce (14) de l'appareil de transport et de positionnement (1), peut être amené en position d'usinage, **caractérisé en ce que** l'appareil de transport et de positionnement (1, T₁, T₂, T₃, T₄) se compose d'un rotor (21) et d'un bras pivotant (23) monté excentriquement sur celui-ci et entraîné, à l'opposé du rotor (21), autour d'un axe (24) parallèle à l'axe (22) du rotor, supportant le porte-pièce (14), les mouvements de rotation du rotor (21) et du bras pivotant (23) étant adaptés l'un à l'autre de telle sorte que le porte-pièce (14) décrit un trajet courbe, fermé (15), avec des sommets (16, 17, 18, 19), dans lequel il reste des espaces libres (6, 7, 8, 9), qui ne sont pas traversés par le porte-pièce (14), entre chaque couple de sommets voisins (16, 17, 18, 19).

2. Dispositif selon la revendication 1, **caractérisé en ce que** le bras pivotant (23) est réalisé sous la forme d'un bras double.

3. Dispositif selon la revendication 1 ou 2, **caractérisé en ce que** des unités de centrage (2a*, 3a*, 4a*, 5a*) pour le porte-pièce (14), sont prévues dans les postes d'usinage (2, 3, 4, 5).

4. Dispositif selon l'une des revendications 1 à 3, **caractérisé en ce que**, au-dessus de l'appareil de transport et de positionnement (1), est disposé un magasin, qui tient à disposition différents types de porte-pièces, dans des positions désignées du trajet en boucle où, avec au moins un dispositif de changement, un porte-pièce, porté par le bras pivotant, peut être échangé contre un porte-pièce d'un autre type, porté par le magasin.

5. Dispositif selon l'une des revendications 1 à 4, **caractérisé en ce que** le rotor (21) et le bras pivotant (23) sont couplés l'un à l'autre à entraînement par l'intermédiaire d'une transmission à engrenages.

6. Dispositif selon l'une des revendications 1 à 5, **caractérisé en ce que** l'alimentation en énergie et les commandes pour l'appareil de transport et de positionnement (1) sont effectuées depuis le dessus de l'appareil de transport et de positionnement (1), par l'intermédiaire d'un distributeur rotatif (26), disposé sur le bras pivotant (23), dans l'axe de rotation (24) de celui-ci.

7. Dispositif selon l'une des revendications 1 à 6, **caractérisé en ce que** le l'appareil de transport et de positionnement (1) est logé, aux postes d'usinage (2, 3, 4, 5), dans une cabine de protection contre les rayonnements, avec des portes.

8. Dispositif selon l'une des revendications 1 à 7, **caractérisé en ce que**, à côté de l'appareil de transport et de positionnement (1, T₁) est installé au moins un autre l'appareil de transport et de positionnement (T₂) similaire, avec lequel une pièce, maintenue par le porte-pièce de l'autre appareil de transport et de positionnement (T₂) peut être amenée, en position d'usinage, au moins dans l'environnement immédiat d'un poste d'usinage (B₃) de l'appareil de transport et de positionnement (T₁).

9. Dispositif selon la revendication 8, **caractérisé en ce que** plusieurs appareils de transport et de positionnement (T₁, T₂, T₃, T₄), avec le même nombre et/ou avec des nombres différents de sommets de leurs trajets courbes et des robots d'usinage et/ou de transport (R₁, R₂, R₃, R₄, R₅), disposés entre ceux-ci, forment une installation de fabrication.

10. Dispositif selon l'une des revendications 1 à 8, **caractérisé en ce que** le trajet courbe, fermé, du porte-pièce est une ellipse.

11. Dispositif selon l'une des revendications 1 à 9, **caractérisé en ce que** le trajet courbe, fermé, est une épicycloïde à trois sommets.

12. Dispositif selon l'une des revendications 1 à 9, **caractérisé en ce que** le trajet courbe, fermé, est une astroïde à quatre sommets.
